# EUROPEAN PATENT APPLICATION

(11) **EP 4 016 300 A1**
(43) Date of publication of application: **22.06.2022**
(21) Application number: 21198426.5
(22) Date of filing: 23.09.2021
(51) Int. Cl.: G06F 9/50

(54) **LOW OVERHEAD MEMORY CONTENT ESTIMATION**

(30) Priority: 18.12.2020 US 202017127915
(71) Applicant: INTEL Corporation, Santa Clara, CA 95054 (US)
(72) Inventor: GUIM BERNAT, Francesc, 08036 Barcelona (ES); KUMAR, Karthik, Chandler, 85249 (US); WILLHALM, Thomas, 69207 Sandhausen (DE); WYSOCKI, Piotr, 80-041 Gdansk (PL)
(74) Representative: 2SPL Patentanwälte PartG mbB

(57) **Abstract**

Systems, apparatuses and methods may provide for technology that samples machine learning (ML) data from a local memory in accordance with a specified configuration, wherein the ML data is associated with one or more tasks submitted by one or more processor cores. The technology may also estimate the complexity of the sampled ML data based on one or more thresholds and schedule the task(s) for execution by one or more accelerators based on the complexity and telemetry data associated with a link to the accelerator(s).

## Description

### TECHNICAL FIELD

Embodiments generally relate to memory structures. More particularly, embodiments relate to low overhead memory content estimation.

### BACKGROUND

Natural language processing (NLP) workloads may benefit from the use of hardware acceleration technology. For example, a hardware queue manager (HQM) may schedule the workloads for execution by field programmable gate arrays (FPGAs) and dispatch the workloads to the FPGAs via a high speed data link such as a CXL (Compute Express Link, e.g., Compute Express Link Specification, Rev. 1.1, June 2019). Variable runtime conditions, however, may prevent conventional HQMs from achieving optimal scheduling performance.

### BRIEF DESCRIPTION OF THE DRAWINGS

The various advantages of the embodiments will become apparent to one skilled in the art by reading the following specification and appended claims, and by referencing the following drawings, in which:
FIG. 1 is a block diagram of an example of a performance-enhanced computing system according to an embodiment;
FIGs. 2A-2C are block diagrams of examples of artificial intelligence (AI) request scheduler implementations according to embodiments;
FIG. 3 is a plot of an example of scheduling rate versus scheduling complexity according to an embodiment;
FIG. 4 is a block diagram of an example of an AI request scheduler and a data movement accelerator according to an embodiment;
FIG. 5 is a flowchart of an example of a method of operating a performance-enhanced computing system according to an embodiment; and
FIG. 6 is an illustration of an example of a semiconductor apparatus according to an embodiment.

### DESCRIPTION OF EMBODIMENTS

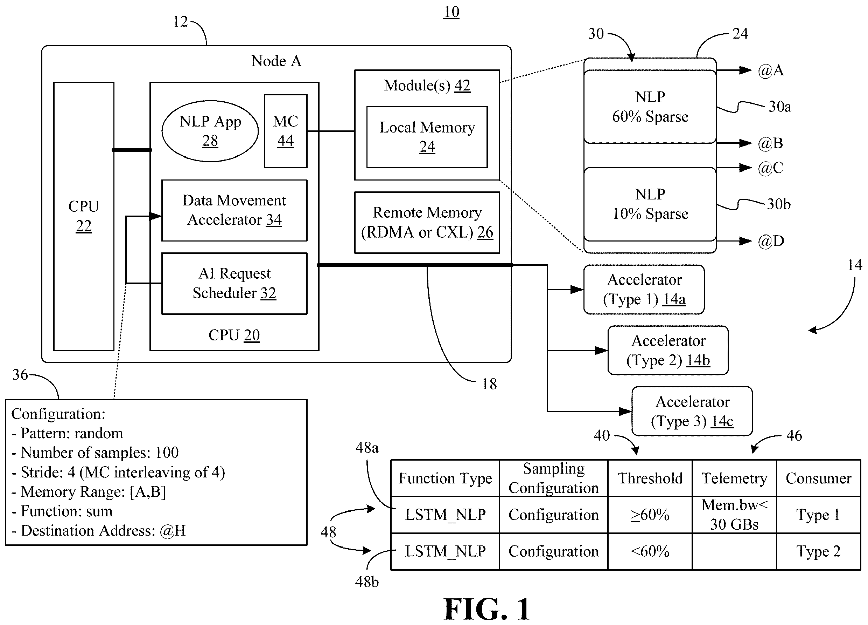

Turning now to FIG. 1, a performance-enhanced computing system 10 is shown in which a compute node 12 ("Node A") is coupled to a plurality of accelerators 14 (14a-14c) via a high speed communications link 18 (e.g., CXL). The performance-enhanced computing system 10 may be deployed in a software ecosystem (e.g., HADOOP) that allows for highly parallel computing. In the illustrated example, the accelerators 14 include a first type of accelerator 14a (e.g., field programmable gate array/FPGA), a second type of accelerator 14b (e.g., graphics processing unit/GPU), a third type of accelerator 14c (e.g., GOYA), and so forth. In an embodiment, the node 12 includes a first CPU (central processing unit, e.g., host processor) 20, a second CPU 22, a local memory 24 (e.g., dynamic random access memory/DRAM, system memory, dual inline memory modules/DIMMs), and a remote memory 26 (e.g., remote direct memory access/RDMA or CXL memory). Cores of the first CPU 20 and/or the second CPU 22 may generally submit machine learning (ML, e.g., neural network, artificial intelligence/AI) tasks (e.g., workloads) to be executed by one or more of the accelerators 14.

In one example, the first CPU 20 executes a natural language processing (NLP) application 28 that stores ML data 30 (30a-30b, e.g., associated with one or more tasks submitted by one or more processor cores) to the local memory 24. A first portion 30a of the illustrated ML data 30 is relatively sparse (e.g., 60% of the matrix elements contain zero values), whereas a second portion 30b of the illustrated ML data 30 is relatively dense (e.g., 10% of the matrix elements contain zero values). As will be discussed in greater detail, the first CPU 20 may use a data movement accelerator 34 to sample the ML data 30 from the local memory 24 in accordance with a specified configuration 36. In an embodiment, the specified configuration 36, which may be generated by an AI request scheduler 32, includes a pattern (e.g., random), a number of samples (e.g., 100, 1000), a stride (e.g., memory controller/MC interleaving of four), a memory range (e.g., [A,B]), a function (e.g., sum, hash, average), a destination address (e.g., @H), etc., and/or any combination thereof. Additionally, the NLP application 28 may provide hints to the data movement accelerator 34 and/or the AI request scheduler 32 on how to handle the ML data 30 in accordance with one or more service level agreement (SLA) constraints.

A function may be registered as, for example, a bit stream and executed on the sampled ML data 30 by, for example, a relatively small accelerator (not shown) in a memory module 42 containing the local memory 24, a memory controller 44 coupled to the local memory 24, and so forth. Executing the function on the sampled ML data 30 may enable the data movement accelerator 34 to estimate the complexity of the ML data 30 based on one or more thresholds 40 (e.g., sparsity thresholds). For example, the data movement accelerator 34 might determine that the second portion 30b of the sampled ML data 30 is relatively complex and the first portion 30a of the sampled ML data 30 is not relatively complex.

In an embodiment, the AI request scheduler 32 schedules the task(s) for execution by one or more of the accelerators 14 based on the complexity and telemetry data 46 (e.g., bandwidth measurements) associated with the link 18 to the accelerators 14. Scheduling the task(s) may involve selecting a function implementation from a plurality of function implementations 48 (48a-48b). For example, tasks corresponding to the first portion 30a of the sampled ML data 30 may be scheduled in accordance with a first function implementation 48a, whereas tasks corresponding to the second portion 30b of the sampled ML data 30 might be scheduled in accordance with a second function implementation 48b.

With regard to the telemetry data 46, the AI request scheduler 32 may be able to capture real-time snapshots such as the following for the link 18.

- Socket 0 has CXL memory drives with 20GB/s current bandwidth (BW), and accelerators A, B, C

- Socket 1 has CXL memory drives with 100GB/s current BW, and accelerators D,E,F

- Socket 2 has CXL memory drives with 5GB/s current BW, and accelerators H,I

- Socket 3 has CXL memory drives with 200GB/s current BW, and accelerators J, K

The illustrated computing system 10 is therefore considered performance-enhanced at least to the extent that the AI request scheduler 32 takes into consideration runtime conditions such as data sparsity and link telemetry when scheduling tasks for execution on the accelerators 14. Moreover, using the low overhead data movement accelerator 34 to sample the ML data 30 and estimate the complexity obviates software-related concerns such as, for example, increased traffic, page table misses, cache misses, cache pollution, coherence traffic (e.g., for read operations) and/or latency. Indeed, during training, the AI request scheduler 32 may be able to automatically select between a long short term memory (LSTM) function implementation when the dataset/matrix is sparse and a less bandwidth intensive transformer-based neural network function implementation when the dataset is less sparse.

The local memory 24 may be part of a memory device that includes non-volatile memory and/or volatile memory. Non-volatile memory is a storage medium that does not require power to maintain the state of data stored by the medium. In one embodiment, the memory structure is a block addressable storage device, such as those based on NAND or NOR technologies. A storage device may also include future generation nonvolatile devices, such as a three-dimensional (3D) crosspoint memory device, or other byte addressable write-in-place nonvolatile memory devices. In one embodiment, the storage device may be or may include memory devices that use silicon-oxide-nitride-oxide-silicon (SONOS) memory, electrically erasable programmable read-only memory (EEPROM), chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thiristor based memory device, or a combination of any of the above, or other memory. The term "storage device" may refer to the die itself and/or to a packaged memory product. In some embodiments, 3D crosspoint memory may comprise a transistor-less stackable cross point architecture in which memory cells sit at the intersection of word lines and bit lines and are individually addressable and in which bit storage is based on a change in bulk resistance. In particular embodiments, a memory module with non-volatile memory may comply with one or more standards promulgated by the Joint Electron Device Engineering Council (JEDEC), such as JESD235, JESD218, JESD219, JESD220-1, JESD223B, JESD223-1, or other suitable standard (the JEDEC standards cited herein are available at jedec. org).

Volatile memory is a storage medium that requires power to maintain the state of data stored by the medium. Examples of volatile memory may include various types of random access memory (RAM), such as dynamic random access memory (DRAM) or static random access memory (SRAM). One particular type of DRAM that may be used in a memory module is synchronous dynamic random access memory (SDRAM). In particular embodiments, DRAM of the memory modules complies with a standard promulgated by JEDEC, such as JESD79F for Double Data Rate (DDR) SDRAM, JESD79-2F for DDR2 SDRAM, JESD79-3F for DDR3 SDRAM, or JESD79-4A for DDR4 SDRAM (these standards are available at jedec.org). Such standards (and similar standards) may be referred to as DDR-based standards and communication interfaces of the storage devices that implement such standards may be referred to as DDR-based interfaces.

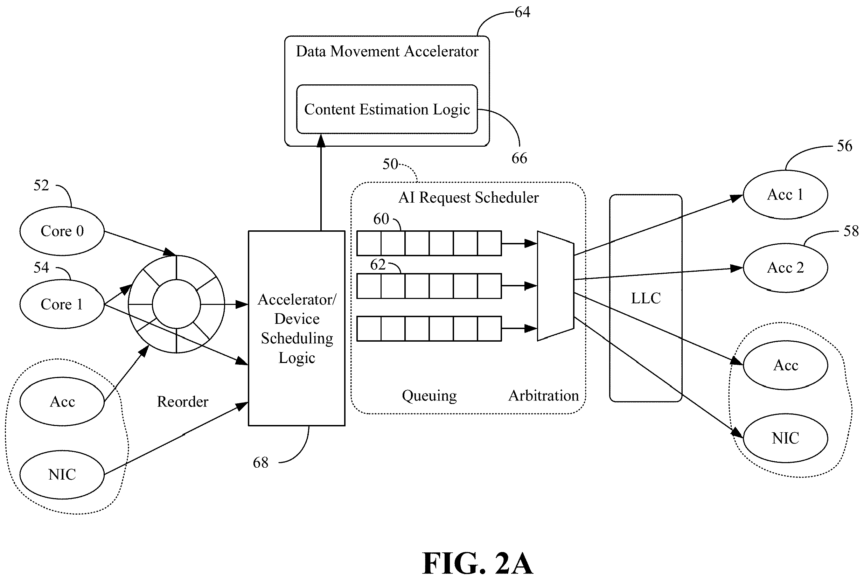

FIG. 2A shows an AI request scheduler 50 implementation in which a first core 52 ("Core 0") and a second core 54 ("Core 1") produce tasks for a first accelerator 56 ("Acc 1") and a second accelerator 58 ("Acc 2"). The tasks may be reordered outside the AI request scheduler 50, which handles queueing and arbitration. In the illustrated example, a first queue 60 and a second queue 62 are mapped to the flow. In an embodiment, a data movement accelerator 64 includes content estimation logic 66 to estimate the complexity of sampled ML data. Accelerator scheduling logic 68 outside the AI request scheduler 50 may communicate with the content estimation logic 66 to determine the complexity of tasks from the cores 52, 54. In one example, the first accelerator 56 processes high complexity requests and low complexity requests when needed, whereas the second accelerator 58 is dedicated to processing low complexity requests. The computing system may also include a multiplexer, a last level cache (LLC) and one or more network interface cards (NICs).

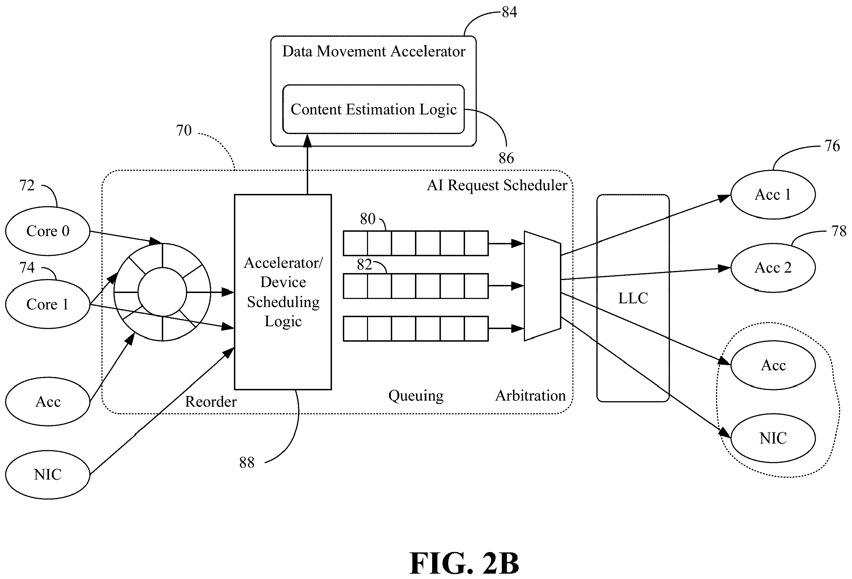

FIG. 2B shows another AI request scheduler 70 implementation in which a first core 72 ("Core 0") and a second core 74 ("Core 1") produce tasks for a first accelerator 76 ("Acc 1") and a second accelerator 78 ("Acc 2"). The tasks may be reordered within the AI request scheduler 70, which also handles queuing and arbitration. In the illustrated example, a first queue 80 and a second queue 82 are mapped to the flow. In an embodiment, a data movement accelerator 84 includes content estimation logic 86 to estimate the complexity of sampled ML data. Accelerator scheduling logic 88 within the AI request scheduler 70 may communicate with the content estimation logic 86 to determine the complexity of tasks from the cores 72, 74. In one example, the AI request scheduler 70 adds metadata when tasks are queued and arbitrates between the first accelerator 76 and the second accelerator 78 (e.g., with different performance characteristics) based on the estimated complexity.

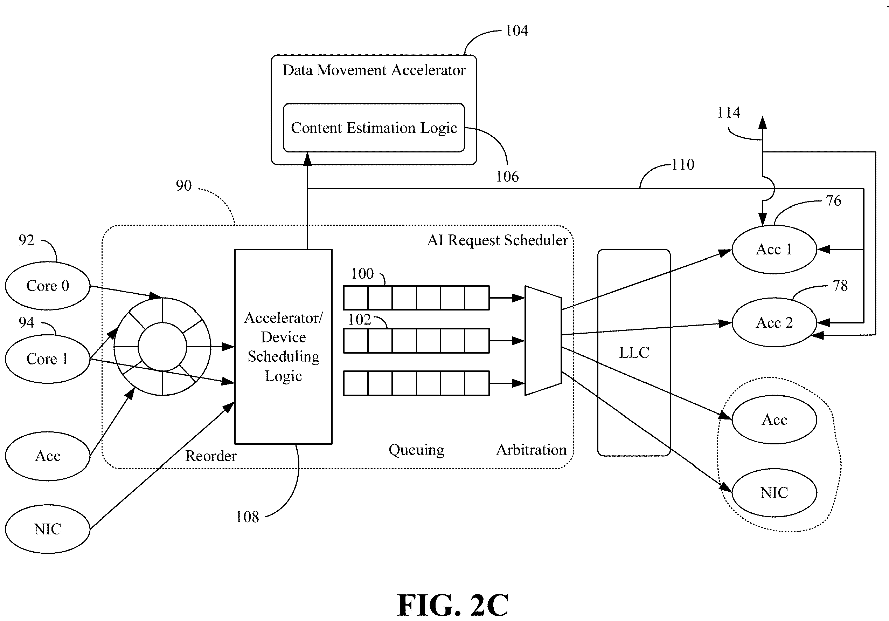

FIG. 2C shows another AI request scheduler 90 implementation in which a first core 92 ("Core 0") and a second core 94 ("Core 1") produce tasks for a first accelerator 96 ("Acc 1") and a second accelerator 98 ("Acc 2"). The tasks may be reordered within the AI request scheduler 90, which also handles queuing and arbitration. In the illustrated example, a first queue 100 and a second queue 102 are mapped to the flow. In an embodiment, a data movement accelerator 104 includes content estimation logic 106 to estimate the complexity of sampled ML data. Accelerator scheduling logic 108 within the AI request scheduler 90 may communicate with the content estimation logic 106 to determine the complexity of tasks from the cores 92, 94. In one example, the accelerator scheduling logic 108 issues pre-fetch hints 110 (e.g., memory objects, size), which are used by the accelerators 76, 78 conduct CXL read pre-fetches 114. The pre-fetch hints 110 may be sent in a way that data is accessed in read mode (e.g., not read for ownership mode) to avoid snoops between the accelerators 76, 78. As already noted, CXL type flows may be used to conduct the read pre-fetches.

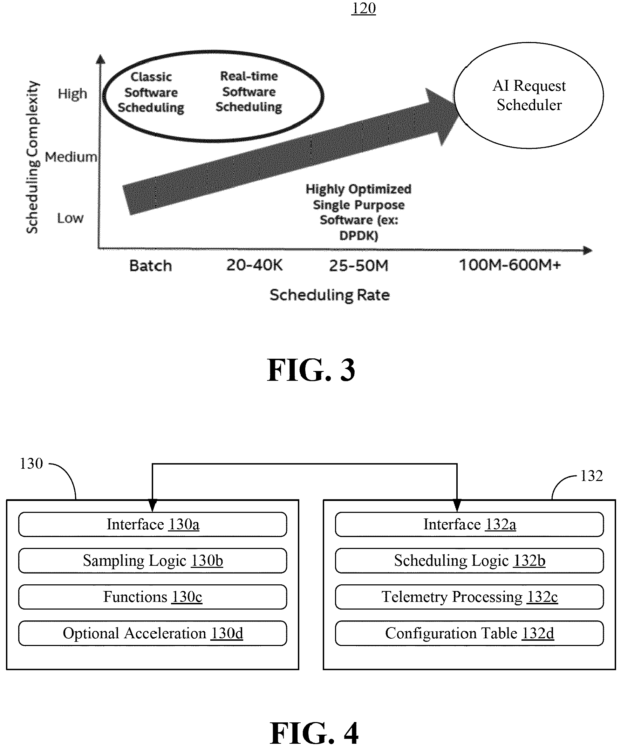

FIG. 3 shows a chart 120 demonstrating that an AI request scheduler as described herein may schedule tasks at substantially greater rates than classic software scheduling and real-time software scheduling. Additionally, the AI request scheduler may schedule substantially more complex tasks than highly optimized single purpose software such as, for example, Data Plane Development Kit (DPDK) software.

FIG. 4 shows a data movement accelerator 130 (130a-130d) and an AI request scheduler 132 (132a-1432d) in communication with one another. The illustrated data movement accelerator 130 exposes an interface 130a to the AI request scheduler 132, wherein the interface 130a may be used to specify patterns or functions (e.g., random, stride etc.), the number of samples to take (e.g., 100, 1000...), and the interleaving that is used by the platform to distribute data into the DIMMS. In an embodiment, the interleaving field is provided via a CPU model specific register (MSR) and is used by sampling logic 130b to access values that are within the same physical address (PA) range. The interleaving information may be used if the data movement accelerator 130 does not access memory through a home agent (HA). The interface 130a may also be used to specify the memory range to be sampled, the function to be applied (sum, hash, etc., where the functions may have parameters that are part of the payload), and the PA where the result is to be stored.

The sampling logic 130b may implement the earlier described flow. For example, the sampling logic 130b may access N values depending on the specified pattern, interleaving and number of samples. In an embodiment, the sampling logic 130b also performs the specific function provided as parameter and stores the result to the specified address.

In one example, the data movement accelerator 130 includes the different supported functions 130c (sum, hash, average, etc.). Optionally, the functions may be registered (e.g., such as bit-streams) and executed in a small accelerator in the DIMM or MC. For such an approach, the data movement accelerator 130 may include another interface to register the bit-streams/functions 130c and an interface to enable the application to discover what functions 130c are available (e.g., via an identifier/ID of the function, meta-data on what the function implements, and meta-data on the parameters used by the function). In an embodiment, an accelerator 130d selects and executes the function.

The illustrated AI request scheduler 132 includes an interface 132a that facilitates registering the different functions 130c that each of the accelerators connected to the platform expose (e.g., when a better match is found). The interface 132a enables the registration of the function type for the selected implementation and the sampling configuration used to identify when the function is more suitable. In an embodiment, the sampling configuration is shared across multiple function implementations for a particular function type and is therefore hosted in a separate table (e.g., indexed by an ID). The interface 132a also facilitates the registration of the sampling threshold, which is a value that is used to decide whether an implementation is appropriate for the current data to be processed (e.g., a Boolean type of rule). Additionally, the interface 132a may be used to register the telemetry rule data that defines when a function is to be chosen based on the current platform telemetry (e.g., if the sampling configuration threshold matches). In one example, the interface 132a is also used to register the consumer or type of accelerator that implements the function.

The illustrated AI request scheduler 132 also includes scheduling logic 132b to decide how to execute a particular function. More particularly, the AI request scheduler 132 uses the functionality of the data movement accelerator 130 to estimate the complexity of data characteristics to be processed by the function. Once the data is to be processed, the AI request scheduler 132 uses the returned sampling, thresholds and telemetry (e.g., if part of the rule) to select the best type of implementation for the corresponding function type. The AI request scheduler 132 may therefore also include a telemetry processing component 132c and a configuration table 132d.

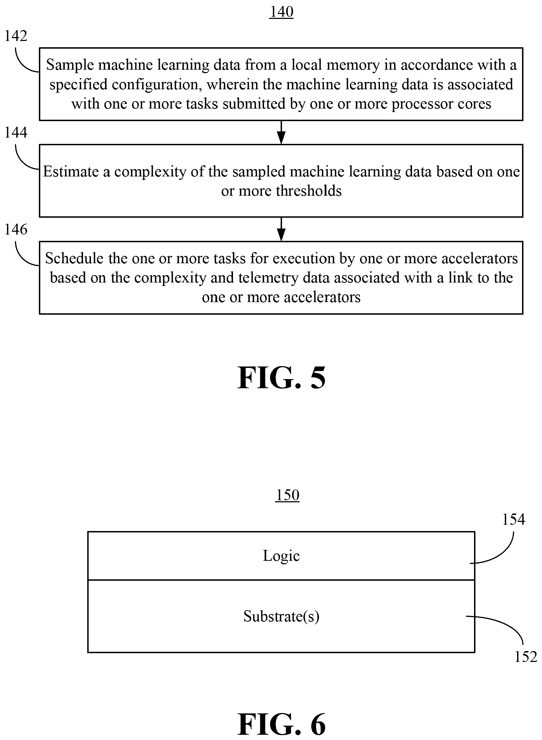

FIG. 5 shows a method 140 of operating a performance-enhanced computing system. The method 140 may generally be implemented in a processor such as, for example, the first CPU 20 (FIG. 1). More particularly, the method 140 may be implemented in configurable logic such as, for example, programmable logic arrays (PLAs), FPGAs, complex programmable logic devices (CPLDs), in fixed-functionality hardware logic using circuit technology such as, for example, application specific integrated circuit (ASIC), complementary metal oxide semiconductor (CMOS) or transistor-transistor logic (TTL) technology, or any combination thereof.

Illustrated processing block 142 provides for sampling machine learning data from a local memory in accordance with a specified configuration, wherein the machine learning data is associated with one or more tasks submitted by one or more processor cores. In an embodiment, block 142 includes generating the specified configuration, wherein the specified configuration includes one or more of a pattern, a number of samples, a stride, a memory range, a function, and a destination address. Additionally, block 142 may involve executing a function on the sampled machine learning data, wherein the function is executed on the sampled machine learning data by an accelerator in one or more of a memory module containing the local memory or a memory controller coupled to the local memory. In an embodiment, the machine learning data is sampled by a data movement accelerator.

Block 144 estimates a complexity of the sampled machine learning data based on one or more thresholds (e.g., sparsity thresholds). Block 144 may also be conducted by the data movement accelerator. In one example, block 146 schedules the one or more tasks for execution by one or more accelerators (e.g., hardware accelerators) based on the complexity and telemetry data (e.g., bandwidth measurements) associated with a link to the one or more accelerators. In an embodiment, the task(s) are scheduled by an AI request scheduler and block 146 includes selecting a function implementation from a plurality of function implementations.

The method 140 enhances performance at least to the extent that block 146 takes into consideration runtime conditions such as data sparsity and link telemetry when scheduling tasks for execution on the accelerators. Moreover, using a low overhead data movement accelerator to sample the ML data and estimate the complexity obviates software-related concerns such as, for example, increased traffic, page table misses, cache misses, cache pollution, coherence traffic (e.g., for read operations) and/or latency. Indeed, during training, the method 140 may be able to automatically select between an LSTM function implementation when the dataset/matrix is sparse and a less bandwidth intensive transformer-based neural network function implementation when the dataset is less sparse.

FIG. 6 shows a semiconductor apparatus 150 (e.g., chip and/or package). The illustrated apparatus 150 includes one or more substrates 152 (e.g., silicon, sapphire, gallium arsenide) and logic 154 (e.g., transistor array and other integrated circuit/IC components) coupled to the substrate(s) 152. In an embodiment, the logic 154 implements one or more aspects of the method 140 (FIG. 5), already discussed. Thus, the logic 154 may sample ML data from a local memory in accordance with a specified configuration, wherein the ML data is associated with one or more tasks submitted by one or more processor cores, and estimate the complexity of the sampled ML data based on one or more thresholds. The logic 154 may also schedule the task(s) for execution by one or more accelerators based on the complexity and telemetry data associated with a link to the accelerator(s).

In one example, the logic 154 includes transistor channel regions that are positioned (e.g., embedded) within the substrate(s) 152. Thus, the interface between the logic 154 and the substrate 152 may not be an abrupt junction. The logic 154 may also be considered to include an epitaxial layer that is grown on an initial wafer of the substrate 152.

### Additional Notes and Examples:

Example 1 includes a processor comprising one or more substrates and logic coupled to the one or more substrates, wherein the logic is implemented at least partly in one or more of configurable or fixed-functionality hardware logic, the logic coupled to the one or more substrates to sample machine learning data from a local memory in accordance with a specified configuration, wherein the machine learning data is associated with one or more tasks submitted by one or more processor cores, estimate a complexity of the sampled machine learning data based on one or more thresholds, and schedule the one or more tasks for execution by one or more accelerators based on the complexity and telemetry data associated with a link to the one or more accelerators.

Example 2 includes the processor of Example 1, wherein the logic coupled to the one or more substrates is to generate the specified configuration, and wherein the specified configuration includes one or more of a pattern, a number of samples, a stride, a memory range, a function, and a destination address.

Example 3 includes the processor of Example 1, wherein the logic coupled to the one or more substrates is to execute a function on the sampled machine learning data.

Example 4 includes the processor of Example 3, wherein the function is executed on the sampled machine learning data by an accelerator in one or more of a memory module containing the local memory or a memory controller coupled to the local memory.

Example 5 includes the processor of Example 1, wherein the one or more tasks are scheduled by an artificial intelligence (AI) request scheduler.

Example 6 includes the processor of Example 1, wherein to schedule the one or more tasks, the logic coupled to the one or more substrates is to select a function implementation from a plurality of function implementations.

Example 7 includes the processor of any one of Examples 1 to 6, wherein the machine learning data is sampled by a data streaming accelerator, and wherein the complexity is estimated by the data streaming accelerator.

Example 8 includes a performance-enhanced computing system comprising a local memory, one or more processor cores, one or more accelerators, and a processor coupled to the local memory, the one or more processor cores, and the one or more accelerators, wherein the processor includes logic coupled to one or more substrates, the logic to sample machine learning data from the local memory in accordance with a specified configuration, wherein the machine learning data is associated with one or more tasks submitted by the one or more processor cores, estimate a complexity of the sampled machine learning data based on one or more thresholds, and schedule the one or more tasks for execution by the one or more accelerators based on the complexity and telemetry data associated with a link to the one or more accelerators.

Example 9 includes the computing system of Example 8, wherein the logic is to generate the specified configuration, and wherein the specified configuration includes one or more of a pattern, a number of samples, a stride, a memory range, a function, and a destination address.

Example 10 includes the computing system of Example 8, wherein the logic is to execute a function on the sampled machine learning data.

Example 11 includes the computing system of Example 10, further including a memory module containing the local memory and a memory controller coupled to the local memory, wherein the function is executed on the sampled machine learning data by an accelerator in one or more of the memory module or the memory controller.

Example 12 includes the computing system of Example 8, wherein the one or more tasks are scheduled by an artificial intelligence (AI) request scheduler.

Example 13 includes the computing system of Example 8, wherein to schedule the one or more tasks, the logic is to select a function implementation from a plurality of function implementations.

Example 14 includes the computing system of any one of Examples 8 to 13, wherein the machine learning data is sampled by a data streaming accelerator, and wherein the complexity is estimated by the data streaming accelerator.

Example 15 includes a method of operating a performance-enhanced computing system, the method comprising sampling machine learning data from a local memory in accordance with a specified configuration, wherein the machine learning data is associated with one or more tasks submitted by one or more processor cores, estimating a complexity of the sampled machine learning data based on one or more thresholds, and scheduling the one or more tasks for execution by one or more accelerators based on the complexity and telemetry data associated with a link to the one or more accelerators.

Example 16 includes the method of Example 15, further including generating the specified configuration, wherein the specified configuration includes one or more of a pattern, a number of samples, a stride, a memory range, a function, and a destination address.

Example 17 includes the method of Example 15, further including executing a function on the sampled machine learning data, wherein the function is executed on the sampled machine learning data by an accelerator in one or more of a memory module containing the local memory or a memory controller coupled to the local memory.

Example 18 includes the method of Example 15, wherein the one or more tasks are scheduled by an artificial intelligence (AI) request scheduler.

Example 19 includes the method of Example 15, wherein scheduling the one or more tasks includes selecting a function implementation from a plurality of function implementations.

Example 20 includes the method of any one of Examples 15 to 19, wherein the machine learning data is sampled by a data streaming accelerator, and wherein the complexity is estimated by the data streaming accelerator.

Example 21 includes an apparatus comprising means for performing the method of any one of Examples 15 to 20.

Technology described herein therefore provides an effective way for software stacks to use hardware acceleration technology to understand or estimate the complexity of data to be processed. The technology also enables efficient determinations of the most appropriate function implementations to be used.

Embodiments are applicable for use with all types of semiconductor integrated circuit ("IC") chips. Examples of these IC chips include but are not limited to processors, controllers, chipset components, programmable logic arrays (PLAs), memory chips, network chips, systems on chip (SoCs), SSD/NAND controller ASICs, and the like. In addition, in some of the drawings, signal conductor lines are represented with lines. Some may be different, to indicate more constituent signal paths, have a number label, to indicate a number of constituent signal paths, and/or have arrows at one or more ends, to indicate primary information flow direction. This, however, should not be construed in a limiting manner. Rather, such added detail may be used in connection with one or more exemplary embodiments to facilitate easier understanding of a circuit. Any represented signal lines, whether or not having additional information, may actually comprise one or more signals that may travel in multiple directions and may be implemented with any suitable type of signal scheme, e.g., digital or analog lines implemented with differential pairs, optical fiber lines, and/or single-ended lines.

Example sizes/models/values/ranges may have been given, although embodiments are not limited to the same. As manufacturing techniques (e.g., photolithography) mature over time, it is expected that devices of smaller size could be manufactured. In addition, well known power/ground connections to IC chips and other components may or may not be shown within the figures, for simplicity of illustration and discussion, and so as not to obscure certain aspects of the embodiments. Further, arrangements may be shown in block diagram form in order to avoid obscuring embodiments, and also in view of the fact that specifics with respect to implementation of such block diagram arrangements are highly dependent upon the platform within which the embodiment is to be implemented, i.e., such specifics should be well within purview of one skilled in the art. Where specific details (e.g., circuits) are set forth in order to describe example embodiments, it should be apparent to one skilled in the art that embodiments can be practiced without, or with variation of, these specific details. The description is thus to be regarded as illustrative instead of limiting.

The term "coupled" may be used herein to refer to any type of relationship, direct or indirect, between the components in question, and may apply to electrical, mechanical, fluid, optical, electromagnetic, electromechanical or other connections. In addition, the terms "first", "second", etc. may be used herein only to facilitate discussion, and carry no particular temporal or chronological significance unless otherwise indicated.

As used in this application and in the claims, a list of items joined by the term "one or more of' may mean any combination of the listed terms. For example, the phrases "one or more of A, B or C" may mean A; B; C; A and B; A and C; B and C; or A, B and C.

Those skilled in the art will appreciate from the foregoing description that the broad techniques of the embodiments can be implemented in a variety of forms. Therefore, while the embodiments have been described in connection with particular examples thereof, the true scope of the embodiments should not be so limited since other modifications will become apparent to the skilled practitioner upon a study of the drawings, specification, and following claims.

## Claims

1. A processor comprising:
one or more substrates; and
logic coupled to the one or more substrates, wherein the logic is implemented at least partly in one or more of configurable or fixed-functionality hardware logic, the logic coupled to the one or more substrates to:
sample machine learning data from a local memory in accordance with a specified configuration, wherein the machine learning data is associated with one or more tasks submitted by one or more processor cores;
estimate a complexity of the sampled machine learning data based on one or more thresholds; and
schedule the one or more tasks for execution by one or more accelerators based on the complexity and telemetry data associated with a link to the one or more accelerators.

2. The processor of claim 1, wherein the logic coupled to the one or more substrates is to generate the specified configuration, and wherein the specified configuration includes one or more of a pattern, a number of samples, a stride, a memory range, a function, and a destination address.

3. The processor of claim 1 or 2, wherein the logic coupled to the one or more substrates is to execute a function on the sampled machine learning data.

4. The processor of claim 3, wherein the function is executed on the sampled machine learning data by an accelerator in one or more of a memory module containing the local memory or a memory controller coupled to the local memory.

5. The processor of one of the previous claims, wherein the one or more tasks are scheduled by an artificial intelligence (AI) request scheduler.

6. The processor of one of the previous claims, wherein to schedule the one or more tasks, the logic coupled to the one or more substrates is to select a function implementation from a plurality of function implementations.

7. The processor of one of the previous claims, wherein the machine learning data is sampled by a data movement accelerator, and wherein the complexity is estimated by the data movement accelerator.

8. A computing system comprising:
a local memory;
one or more processor cores;
one or more accelerators; and
a processor coupled to the local memory, the one or more processor cores, and the one or more accelerators, wherein the processor includes logic coupled to one or more substrates, the logic to:
sample machine learning data from the local memory in accordance with a specified configuration, wherein the machine learning data is associated with one or more tasks submitted by the one or more processor cores,
estimate a complexity of the sampled machine learning data based on one or more thresholds, and
schedule the one or more tasks for execution by the one or more accelerators based on the complexity and telemetry data associated with a link to the one or more accelerators.

9. The computing system of claim 8, wherein the logic is to generate the specified configuration, and wherein the specified configuration includes one or more of a pattern, a number of samples, a stride, a memory range, a function, and a destination address.

10. The computing system of claim 8 or 9, wherein the logic is to execute a function on the sampled machine learning data.

11. The computing system of claim 10, further including a memory module containing the local memory and a memory controller coupled to the local memory, wherein the function is executed on the sampled machine learning data by an accelerator in one or more of the memory module or the memory controller.

12. The computing system of one of the claims 8-11, wherein the one or more tasks are scheduled by an artificial intelligence (AI) request scheduler.

13. The computing system of one of the claims 8-12, wherein to schedule the one or more tasks, the logic is to select a function implementation from a plurality of function implementations.

14. The computing system of one of the claims 8-13, wherein the machine learning data is sampled by a data movement accelerator, and wherein the complexity is estimated by the data movement accelerator.

15. A method comprising:
sampling machine learning data from a local memory in accordance with a specified configuration, wherein the machine learning data is associated with one or more tasks submitted by one or more processor cores;
estimating a complexity of the sampled machine learning data based on one or more thresholds; and
scheduling the one or more tasks for execution by one or more accelerators based on the complexity and telemetry data associated with a link to the one or more accelerators.
